(19)

Europäisches
Patentamt
European
Patent Office
Office européen
des brevets

(11)  **EP 4 310 405 A1**

(12)  **EUROPEAN PATENT APPLICATION**
published in accordance with Art. 153(4) EPC

(43) Date of publication:
**24.01.2024   Bulletin 2024/04**

(21) Application number: **22810278.6**

(22) Date of filing: **24.04.2022**

(51) International Patent Classification (IPC):
***F24F 11/00*** *(2018.01)*

(52) Cooperative Patent Classification (CPC):
**F24F 11/00; F24F 11/58; F24F 11/64; F24F 11/65; F24F 11/70;** Y02B 30/70

(86) International application number:
**PCT/CN2022/088668**

(87) International publication number:
**WO 2022/247545 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **26.05.2021   CN 202110582292**

(71) Applicants:
• **Midea Group Co., Ltd.**
**Foshan, Guangdong 528311 (CN)**
• **GD Midea Air-Conditioning Equipment Co., Ltd.**
**Foshan, Guangdong 528311 (CN)**

(72) Inventors:
• **ZHANG, Hao**
**Foshan, Guangdong 528311 (CN)**

• **WANG, Zhengxing**
**Foshan, Guangdong 528311 (CN)**
• **TAO, Kui**
**Foshan, Guangdong 528311 (CN)**
• **LI, Shunquan**
**Foshan, Guangdong 528311 (CN)**
• **LI, Jianfeng**
**Foshan, Guangdong 528311 (CN)**
• **ZHU, Shenghao**
**Foshan, Guangdong 528311 (CN)**

(74) Representative: **Whitlock, Holly Elizabeth Ann et al**
**Maucher Jenkins**
**Seventh Floor Offices**
**Artillery House**
**11-19 Artillery Row**
**London SW1P 1RT (GB)**

(54)  **MULTI-SPLIT AIR CONDITIONER CONTROL METHOD AND APPARATUS, DEVICE, AND STORAGE MEDIUM**

(57)    The present application relates to the technical field of air conditioners, and discloses a multi-split air conditioner control method and apparatus, a device, and a storage medium. The method comprises: when it is detected that an indoor unit of a multi-split air conditioner is set to multiple working modes, acquiring capacity information of the indoor unit corresponding to the working modes; determining a target working mode from among the multiple working modes according to the capacity information; and determining a first control parameter of an outdoor unit of the multi-split air conditioner on the basis of the target working mode, and driving the outdoor unit according to the first control parameter.

obtaining capacity information of the indoor unit corresponding to each operating mode in response to detecting that indoor units of the VRF air conditioner are set to a plurality of operating modes — S10

determining a target operating mode from the plurality of operating modes according to the capacity information — S20

determining a first control parameter of an outdoor unit of the VRF air conditioner according to the target operating mode, and driving the outdoor unit according to the first control parameter — S30

FIG. 2

EP 4 310 405 A1

**Description**

**CROSS-REFERENCE TO RELATED APPLICATION**

This application claims priority to Chinese Patent Application No. 202110582292.4, filed on May 26, 2021, the entire contents of which are incorporated herein by reference.

**TECHNICAL FIELD**

The present application relates to the technical field of air conditioners, and, in particular, to a method, a device, an equipment for controlling a variable refrigerant flow air conditioner, and a storage medium.

**BACKGROUND**

The variable refrigerant flow (VRF) air conditioner includes a plurality of indoor units. Due to individual differences, different indoor units may operate in different operating modes. For example, some indoor units operate in the refrigerating mode and some operate in the breezeless mode. Since indoor units in different operating modes have different requirements for the outdoor unit, it is difficult to balance requirements of different users in the existing VRF air conditioners, resulting in poor user experience. Therefore, how to improve the user experience of VRF air conditioners is an urgent technical problem to be solved.

**SUMMARY**

The main purpose of the present application is to provide a method, a device, an equipment for controlling a variable refrigerant flow (VRF) air conditioner, and a storage medium, aiming to solve the technical problem that it is difficult to balance requirements of different users in the existing VRF air conditioners, resulting in poor user experience.
In order to solve the above objectives, the present application provides a method for controlling the VRF air conditioner, including:

obtaining capacity information of the indoor unit corresponding to each operating mode in response to detecting that indoor units of the VRF air conditioner are set to a plurality of operating modes;
determining a target operating mode from the plurality of operating modes according to the capacity information; and
determining a first control parameter of an outdoor unit of the VRF air conditioner according to the target operating mode, and driving the outdoor unit according to the first control parameter.
In an embodiment, the determining the first control parameter of the outdoor unit of the VRF air conditioner according to the target operating mode, and driving the outdoor unit according to the first control parameter includes:
determining that the target operating mode is a breezeless mode, and obtaining an environmental parameter of an environment where each indoor unit is located;
determining a lowest refrigeration temperature corresponding to the indoor unit of the VRF air conditioner in response to that the environmental parameter meets a refrigerating condition; and
determining the first control parameter of the outdoor unit according to the lowest refrigeration temperature, and driving the outdoor unit according to the first control parameter.

In an embodiment, after the obtaining the environmental parameter of the environment where each indoor unit is located, the method further includes:

determining a humidity value of the environment where the indoor unit in the breezeless mode is located according to the environmental parameter in response to that the environmental parameter does not meet the refrigerating condition; and
determining the first control parameter of the outdoor unit according to the humidity value, and driving the outdoor unit according to the first control parameter.

In an embodiment, the determining the first control parameter of the outdoor unit of the VRF air conditioner according to the target operating mode, and driving the outdoor unit according to the first control parameter includes:

determining that the target operating mode is a refrigerating mode, and determining a lowest refrigeration temperature corresponding to the indoor unit of the VRF air conditioner; and
determining the first control parameter of the outdoor unit according to the lowest refrigeration temperature, and driving the outdoor unit according to the first control parameter.

In an embodiment, after the driving the outdoor unit according to the first control parameter, the method includes:

obtaining a current control parameter of each indoor unit in the breezeless mode;
determining a second control parameter according to the first control parameter and the current control parameter; and
driving each indoor unit in the breezeless mode according to the second control parameter.

In an embodiment, the determining the target operating mode from the plurality of operating modes according to the capacity information includes:
setting the operating mode of the indoor unit corresponding to a maximum capacity in the capacity information as the target operating mode.
In an embodiment, the determining the target operating mode from the plurality of operating modes according to the capacity information includes:

obtaining the capacity information of the outdoor unit of the VRF air conditioner;
determining a ratio between capacity information corresponding to each operating mode and capacity information of the outdoor unit; and
determining the target operating mode according to the ratio.

Moreover, in order to solve the above objectives, the present application further provides a device for controlling the VRF air conditioner, including:

an acquisition module, configured to detect that indoor units of the VRF air conditioner are set to a plurality of operating modes and obtain capacity information of the indoor unit corresponding to each operating mode;
an analysis module, configured to determine a target operating mode from the plurality of operating modes according to the capacity information; and
a driving module, configured to determine a first control parameter of an outdoor unit of the VRF air conditioner according to the target operating mode and drive the outdoor unit according to the first control parameter.

Moreover, in order to solve the above objectives, the present application further provides an equipment for controlling the VRF air conditioner, including a memory, a processor, and a program for controlling the VRF air conditioner stored in the memory and executable on the processor. When the program for controlling the VRF air conditioner is executed by the processor, the method for controlling the VRF air conditioner as mentioned above is implemented.
Moreover, in order to solve the above objectives, the present application further provides a storage medium. A program for controlling the VRF air conditioner is stored in the storage medium, and when the program for controlling the VRF air conditioner is executed by a processor, the method for controlling the VRF air conditioner as mentioned above is implemented.
In the present application, it is detected that indoor units of the VRF air conditioner are set to a plurality of operating modes, and capacity information of the indoor unit corresponding to each operating mode is obtained. The target operating mode is determined from the plurality of operating modes according to the capacity information. The first control parameter of the outdoor unit of the VRF air conditioner is determined according to the target operating mode, and the outdoor unit is driven according to the first control parameter. In this application, when the indoor unit of the VRF air conditioner operates in different operating modes, the operating mode with the highest priority is determined from each operating mode according to the capacity of the indoor unit, and the control parameter of the outdoor unit is calculated based on the determined operating mode with the highest priority, so that the outdoor unit can meet the requirements of the indoor unit operating in the operating mode with the highest priority. In this embodiment, the operating state of the VRF air conditioner is detected in real time, thereby adjusting the operating state of the outdoor unit in real time, to ensure that user requirements are met and improve user experience.

**BRIEF DESCRIPTION OF THE DRAWINGS**

FIG. 1 is a schematic structural diagram of an equipment for controlling a variable refrigerant flow (VRF) air conditioner under a hardware operating environment according to an embodiment of the present application.
FIG. 2 is a schematic flowchart of a method for controlling the VRF air conditioner according to a first embodiment of the present application.

FIG. 3 is a schematic flowchart of the method for controlling the VRF air conditioner according to a second embodiment of the present application.

FIG. 4 is a schematic flowchart of the method for controlling the VRF air conditioner according to a third embodiment of the present application.

FIG. 5 is a structural block diagram of the device for controlling the VRF air conditioner according to a first embodiment of the present application.

The realization of the objective, functional characteristics, and advantages of the present application are further described with reference to the accompanying drawings.

## DETAILED DESCRIPTION OF THE EMBODIMENTS

It should be understood that the embodiments described here are only used to explain the present application and are not intended to limit the present application.

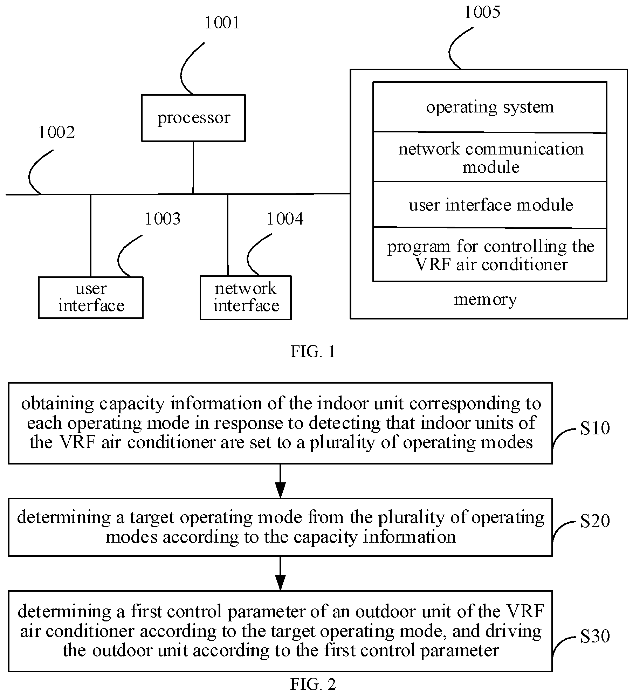

Referring to FIG. 1, FIG. 1 is a schematic structural diagram of an equipment for controlling a variable refrigerant flow (VRF) air conditioner under a hardware operating environment according to an embodiment of the present application.

As shown in FIG. 1, the equipment for controlling the VRF air conditioner may include: a processor 1001, such as a central processing unit (CPU), a communication bus 1002, a user interface 1003, a network interface 1004, and a memory 1005. The communication bus 1002 is configured to realize connection communication between these components. The user interface 1003 may include a display screen. The user interface 1003 may also include a standard wired interface and a wireless interface. The wired interface of the user interface 1003 may be a USB interface in this application. The network interface 1004 may include a standard wired interface, a wireless interface (such as a Wireless-Fidelity interface). The memory 1005 may be a high-speed random access memory (RAM) or a non-volatile memory (NVM), such as a disk memory. The memory 1005 may also be a storage device independent of the aforementioned processor 1001.

Those skilled in the art can understand that the structure shown in FIG. 1 does not constitute a limitation on the equipment for controlling the VRF air conditioner, and may include more or less components than shown in the figure, or a combination of components, or differently arranged components.

As shown in FIG. 1, the memory 1005, which is configured as a computer storage medium, may include an operating system, a network communication module, a user interface module, and a program for controlling the VRF air conditioner.

In the equipment for controlling the VRF air conditioner shown in FIG. 1, the network interface 1004 is mainly configured to connect to the back-end server and perform data communication with the back-end server. The user interface 1003 is mainly configured to connect to the user equipment. The equipment for controlling the VRF air conditioner uses the processor 1001 to call the program for controlling the VRF air conditioner stored in the memory 1005 and execute the method for controlling the VRF air conditioner in the embodiments of the present application.

Based on the above hardware structure, an embodiment of the method for controlling the VRF air conditioner of the present application is proposed.

As shown in FIG. 2, FIG. 2 is a schematic flowchart of the method for controlling the VRF air conditioner according to a first embodiment of the present application, and the first embodiment of the method for controlling the VRF air conditioner of the present application is proposed.

In the first embodiment, the method for controlling the VRF air conditioner includes the following operations.

Operation S10, obtaining capacity information of the indoor unit corresponding to each operating mode in response to detecting that indoor units of the VRF air conditioner are set to a plurality of operating modes.

It should be understood that the execution means of this embodiment is the above-mentioned equipment for controlling the VRF air conditioner. The equipment for controlling the VRF air conditioner has functions such as data processing, data communication, and program running. The equipment for controlling the VRF air conditioner can be a control box equipment integrated with the air conditioner. The equipment for controlling the VRF air conditioner can further be a control box inside an outdoor unit of the VRF air conditioner. Of course, the equipment for controlling the VRF air conditioner can also be other equipment with similar functions, which is not limited in this embodiment.

The VRF air conditioner includes an outdoor unit and a plurality of indoor units. After the confluence of the refrigerants in each indoor unit, the refrigerants will exchange heat in an outdoor unit. Each indoor unit can be controlled independently, which means that each indoor unit can be set to different operating modes. The operating modes mainly include a breezeless mode, a refrigerating mode or a heating mode. Setting the indoor unit of the VRF air conditioner to a plurality of operating modes means that at least two indoor units operate in different operating modes. For example, at least one indoor unit is set to the refrigerating mode and at least one indoor unit is set to the breezeless mode.

Different operating modes have different requirements for the evaporation temperature of the outdoor unit. For example, in the breezeless mode, the outdoor unit needs to provide a suitable temperature and comfortable wind feeling while avoiding the risk of condensation. Therefore, a higher evaporation temperature is required. In the refrigerating mode, if a suitable temperature and the faster refrigerating are required, the outdoor unit needs to be controlled to provide a lower evaporation temperature.

The capacity information can be the refrigerating capacity of the air conditioner, and each indoor unit can be classified according to the operating mode, and the sum of the refrigerating capacity of each indoor unit in each operating mode can be calculated. For example, if indoor units 1, 2, and 3 are set to the refrigerating mode, and indoor units 4 and 5 are set to the breezeless mode, then the obtained capacity information includes the sum A of the refrigerating capacity of indoor units 1, 2, and 3 in the refrigerating mode, and the sum B of the refrigerating capacity of indoor units 4 and 5 in the breezeless mode. When the VRF air conditioner operates, each indoor unit can detect its operating parameter in real time or regularly, and then feed the parameter back to the outdoor unit. The outdoor unit determines the capacity information of each indoor unit according to the received parameters.

Operation S20, determining a target operating mode from the plurality of operating modes according to the capacity information.

Although the indoor units are set to a plurality of operating modes, the outdoor units can only be in one operating state. Therefore, in order to ensure the user experience, it is necessary to ensure that some indoor units can operate according to the original requirements. In addition, it is necessary to avoid serious fluctuations of other indoor units, which cannot deviate from the original requirements, and these indoor units correspond to the target operating mode with the highest priority.

In this embodiment, the priority of each operating mode is determined based on the capacity information. For example, the operating mode with the highest refrigerating capacity is used as the target operating mode. Or, considering the user's preference for different operating modes, the refrigerating capacity corresponding to each operating mode is corrected according to preset weight values, and then the operating mode with the highest refrigerating capacity is used as the target operating mode. Of course, the selection method for the target operating mode can be set according to user requirements, which is not limited in this embodiment.

Since user requirements may change at any time, the target operating mode may also change. For example, if the refrigerating capacities of the above-mentioned indoor units 1, 2, 3, 4, and 5 are same, when all indoor units are turned on, the target operating mode is the refrigerating mode. If the indoor units 1 and 2 are turned off, the target operating mode is the breezeless mode. The target operating mode can be determined at certain intervals, to respond to user operations timely.

Operation S30, determining a first control parameter of an outdoor unit of the VRF air conditioner according to the target operating mode, and driving the outdoor unit according to the first control parameter.

In the refrigerating mode, the outdoor unit needs to dissipate heat of the inputted high-temperature and high-pressure refrigerant, and output the low-temperature and low-pressure refrigerant to the indoor unit. Therefore, the first control parameter can be the evaporation temperature of the outdoor unit or the working frequency of the compressor.

The calculation methods for the first control parameters in different operating modes are preset in the equipment for controlling the VRF air conditioner. After the target operating mode is determined, the first control parameter is determined based on the calculation method corresponding to the target operating mode. The calculation method for the first control parameter can be set according to user experience, which is not limited in this embodiment. If the indoor unit of the VRF air conditioner is only set to one operating mode, the equipment for controlling the VRF air conditioner can directly determine the corresponding control parameters based on the preset calculation method.

After the first control parameter is determined, if the first control parameter is the evaporation temperature, the outdoor unit is controlled, and the compressor power is controlled according to the evaporation temperature of the outdoor unit. Or, if the first control parameter is the compressor frequency, the compressor power is controlled to reach the frequency in the first control parameter.

In the first embodiment, when the indoor unit of the VRF air conditioner operates in different operating modes, the operating mode with the highest priority is determined from each operating mode according to the capacity of the indoor unit, and the control parameter of the outdoor unit is calculated based on the determined operating mode with the highest priority, so that the outdoor unit can meet the requirements of the indoor unit operating in the operating mode with the highest priority. In this embodiment, the operating state of the VRF air conditioner is detected in real time, thereby adjusting the operating state of the outdoor unit in real time, to ensure that user requirements are met and improve user experience.

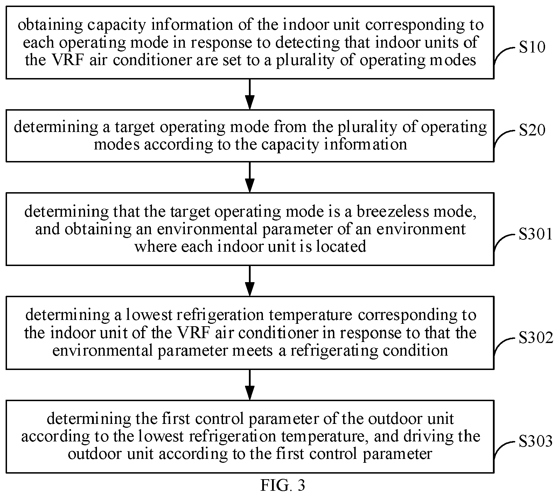

As shown in FIG. 3, FIG. 3 is a schematic flowchart of the method for controlling the VRF air conditioner according to a second embodiment of the present application. Based on the above-mentioned first embodiment, a second embodiment of the method for controlling the VRF air conditioner of the present application is proposed.

In the second embodiment, in order to better control the outdoor unit and improve user experience, before the operation S30, the method for controlling the VRF air conditioner includes following operations.

Operation S301, determining that the target operating mode is a breezeless mode, and obtaining an environmental parameter of an environment where each indoor unit is located.

Environmental parameters can include temperature values, humidity values, and the like. A temperature sensor and a humidity sensor can be preset at the indoor unit. When detecting its own operation, the indoor unit reads the detection values of the temperature sensor and the humidity sensor synchronously, and sends the temperature values and humidity values to the outdoor unit. The transmission data is received by the outdoor unit to obtain the environmental parameters of the environment where each indoor unit is located.

Operation S302, determining a lowest refrigeration temperature corresponding to the indoor unit of the VRF air conditioner in response to that the environmental parameter meets a refrigerating condition.

Generally, among temperature and breeze sensation, users are more sensitive to temperature. Therefore, even if the breezeless mode should be used as the target operating mode, the user's requirement for temperature still needs to be considered. If the temperature is too high, it needs to be cooled down first. Or, when the humidity of the environment of the indoor unit in the breezeless mode is high, condensation is likely to occur in the breezeless mode. If the humidity is too high, it needs to be cooled down first.

Considering the above two factors, it is necessary to first identify the environment of each indoor unit to determine whether there is a requirement for refrigeration. If so, refrigeration control should be performed first. Specifically, temperature thresholds and humidity thresholds can be set, and when the temperature value or the humidity value exceed the set threshold, it is determined that the environmental parameters meet the refrigerating conditions. For example, the temperature threshold can be T1a+C1, T1a has a value of 30°C and the recommended range is 26~32°C. The recommended value of the engineering parameter C1 is 0°C, and the recommended range is -5~5°C. The humidity threshold can be Hx. The recommended value of the humidity threshold Hx is 85%, and the preferred range is 70% to 90%. If the detected environment temperature T1 of each indoor unit or the humidity value H1 of the indoor unit in the breezeless mode meets T1>T1a+C1, or H1>Hx, it is determined that the environmental parameters meet the refrigerating conditions. This determination process can be carried out every first time, to avoid refrigerating for too long time and affecting the experience of users who need the breezeless mode.

After refrigeration is controlled first, the corresponding refrigeration parameters need to be determined. The minimum refrigerating temperature refers to the minimum value among the set refrigerating temperatures of each indoor unit, and the set refrigerating temperature is the expected refrigerating temperature value set by the user.

Operation S303, determining the first control parameter of the outdoor unit according to the lowest refrigeration temperature, and driving the outdoor unit according to the first control parameter.

After the minimum refrigeration temperature is determined, the evaporation temperature of the refrigerant outputted by the outdoor unit or the operating frequency of the compressor is calculated according to the preset calculation method, and then the outdoor unit is controlled according to the determined first control parameter. In the refrigerating mode, the technology for determining the control parameters of the outdoor unit is mature, which will not be repeated in this embodiment.

Correspondingly, when the environmental parameters do not meet the refrigerating conditions, it means that the first control parameter can be determined directly according to the calculation method of the breezeless mode. Specifically, the humidity value of the environment of the indoor unit in the breezeless mode is first determined based on the environmental parameters, and the first control parameter of the outdoor unit is determined based on the humidity value, then the outdoor unit is driven according to the first control parameter.

The specific method of determining whether the environmental parameters meet the refrigerating conditions can refer to the aforementioned description. Of course, after the aforementioned refrigeration control, when the environmental temperature of each indoor unit is low and the humidity of the environment of the indoor unit in the breezeless mode is low, the breezeless mode control can also be performed.

In order to ensure the control effect in the breezeless mode, the humidity value referenced for calculating the first control parameter should be the maximum humidity value among the corresponding humidity values of each indoor unit in the breezeless mode, thereby ensuring that all indoor units in the breezeless mode can achieve the expected user experience.

Specifically, when the target operating mode is the breezeless mode, the calculation process of the first control parameter can refer to the following formula:

$$b=Td-C1$$

b is the temperature value of the output refrigerant. Td is the dew point temperature of the indoor unit in the breezeless mode. C1 is an engineering constant, and the specific value can be set according to user requirements, for example, the value range of C1 can be 0~12°C, preferably 5°C.

The dew point temperature can be calculated according to the following formula:

$$T_d = -35.957 - 1.8726(\ln H_1 + \frac{C_8}{T} + C_9 + C_{10} \cdot T + C_{11} \cdot T^2 + C_{12} \cdot T^3 + C_{13} \cdot \ln T)$$

$$+ 1.1689(\ln H_1 + \frac{C_8}{T} + C_9 + C_{10} \cdot T + C_{11} \cdot T^2 + C_{12} \cdot T^3 + C_{13} \cdot \ln T)^2$$

$$T = T_1 + {+}273.15$$

$T_d$ is the dew point temperature, and the range of $T_d$ is usually [6, 22] °C. $H_1$ is the maximum humidity value, and the range of $H_1$ is usually [20%, 90%]. $C_8$, $C_9$, $C_{10}$, $C_{11}$, $C_{12}$, and $C_{13}$ are engineering constants, and their specific values can be determined according to the user's requirements. Such as, $C_8$ = -5800.2206 , $C_9$ = 1.3914993 , $C_{10}$ = -0.0486023 9 , $C_{11}$ = 0.41764768 *$10^{-4}$, $C_{12}$ = -0.1445209 3*$10^{-7}$, and $C_{13}$ = 6.5459673 . $T_1$ is the environmental temperature of the indoor unit in the breezeless mode, and the range is usually [16, 30]°C.

In addition, if the determined target operating mode is the refrigerating mode, the calculation method of the first control parameter can refer to step S303, which also determines the lowest refrigeration temperature corresponding to the indoor unit of the VRF air conditioner, and determines the first control parameter of the outdoor unit based on the lowest refrigeration temperature, then drives the outdoor unit according to the first control parameter, which will not be repeated in this embodiment.

In the second embodiment, when the target operating mode is the breezeless mode, before determining the control parameters according to the breezeless mode, the outdoor unit will determine whether the environment of each indoor unit needs to be refrigerated first, to avoid that the user cannot obtain the expected refrigerating effect, or avoid that the user experience is reduced due to condensation. When refrigerating control is required, the corresponding control parameters are first determined according to the refrigerating mode, and when refrigerating is no longer required, the control parameters are determined according to the breezeless mode to control the outdoor unit and improve user experience.

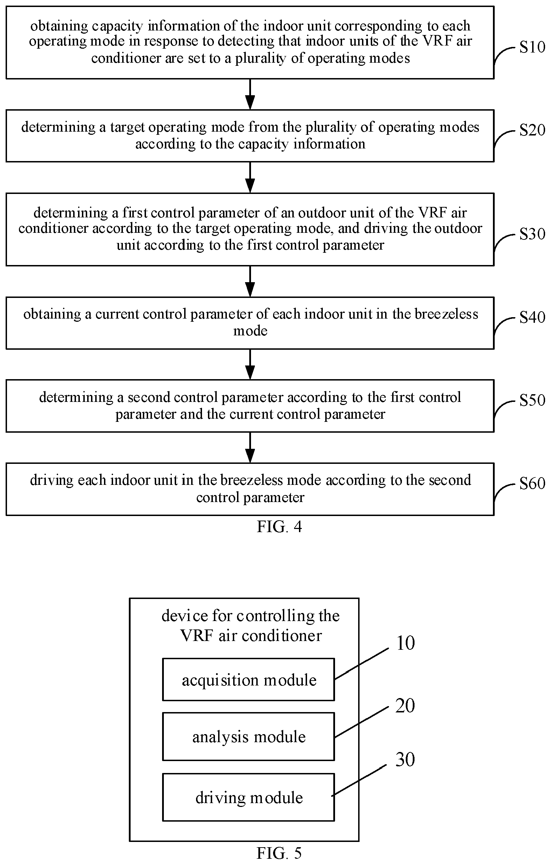

As shown in FIG. 4, FIG. 4 is a schematic flowchart of the method for controlling the VRF air conditioner according to a third embodiment of the present application. Based on the above-mentioned first and second embodiments, a third embodiment of the method for controlling the VRF air conditioner of the present application is proposed.

In the third embodiment, in order to improve the user experience, while adjusting the outdoor unit, the indoor unit also needs to be adjusted. Therefore, after the operation S30, the method for controlling the VRF air conditioner further includes following operations.

Operation S40, obtaining a current control parameter of each indoor unit in the breezeless mode.

The control part of the indoor unit mainly includes the opening control of the electronic expansion valve, the rotational speed control of the fan and the angle control of the air guide plate. In this embodiment, the method for controlling the indoor unit in the breezeless mode is used for explanation, and the indoor unit in the refrigerating mode can be controlled by a corresponding method.

For the air guide plate, the upper air guide plate and the lower air guide plate are disposed at the maximum angle, and the vertical air guide strips are disposed at a breezeless angle. If the user sets other angles, the angle of the corresponding air guide plate is set to the user-set angle.

The control of the fan is mainly divided into automatic control and manual control. Manual control refers to determining the rotational speed based on the rotational speed set by the user. Automatic control refers to determining the fan speed based on the difference between the environmental temperature detected by the indoor unit and the user-set temperature. For example, the temperature difference between the environmental temperature and the set temperature is divided into multiple difference intervals, and corresponding rotational speed is set for each interval. For example, in the decline curve of the rotational speed, the corresponding relationship between the temperature difference and the rotational speed is: if the temperature difference is less than 0°C, the corresponding rotational speed is level 80; if the temperature difference ranges from 0°C to 0.5°C, the corresponding rotational speed is level 1; if the temperature difference ranges from 0.5°C to 1°C, the corresponding rotational speed is level 20; if the temperature difference ranges from 1°C to 1.5°C, the corresponding rotational speed is level 40; if the temperature difference ranges from 1.5°C to 3.5°C, the corresponding rotational speed is level 60; if the temperature difference is more than 3.5°C, the corresponding rotational speed is level 80. In the rising curve of the rotational speed, the corresponding relationship between the temperature difference and the rotational speed is: if the temperature difference is less than 0.5°C, the corresponding rotational speed is level 1; if the temperature difference ranges from 0.5°C to 1°C, the corresponding rotational speed is level 20; if the temperature difference ranges from 1°C to 1.5°C, the corresponding rotational speed is level 40; if the temperature difference ranges from 1.5°C to 2°C, the corresponding rotational speed is level 60; if the temperature difference ranges from 2°C to 4°C, the corresponding rotational speed is level 80. Of course, the division for the specific difference interval and the corresponding rotational speed can be set according to user requirements, which is not limited in this embodiment.

The opening degree of the electronic expansion valve is controlled according to the superheat degree, and the corresponding relationship between the opening degree and the superheat degree is affected by the evaporation temperature of the indoor unit and the outdoor unit. Therefore, the current control parameters in this embodiment mainly include the evaporation temperature of the indoor unit. The evaporation temperature is mainly related to the humidity value of the environment where each indoor unit is located, so the evaporation temperature of each indoor unit may be same or different. The specific calculation method may be referred to the second embodiment, which will not be repeated in this embodiment.

Operation S50, determining a second control parameter according to the first control parameter and the current control parameter.

The second control parameter may be the opening degree of the electronic expansion valve. To determine the opening degree of the electronic expansion valve, the superheat degree parameter needs to be determined first. The superheat degree parameter is mainly related to the humidity value of the environment where the indoor unit is located. The greater the humidity value, the greater the superheat degree.

In order to better determine the superheat degree, in this embodiment, the relationship between the superheat degree and the humidity value is determined first based on the evaporation temperature of the outdoor unit and the evaporation temperature of the indoor unit. For example, when the evaporation temperature of the indoor unit is greater than or equal to the evaporation temperature of the outdoor unit, the value range of the superheat degree is the first temperature range, such as 2~8°C. The superheat degree parameter can be determined based on the detected current humidity and the preset corresponding relationship between the superheat degree and the humidity value.

When the evaporation temperature of the indoor unit is lower than the evaporation temperature of the outdoor unit, the value range of the superheat degree is the second temperature range, such as 1~9°C. In this case, there are two corresponding curves of the relationship between the superheat degree and the humidity value, namely the rising curve and the falling curve. The rising curve means that the humidity value shows an upward trend when the indoor unit operates. The decline curve means that the humidity value shows a downward trend when the indoor unit operates. In this case, the corresponding superheat degree can be determined according to the humidity control trend of the indoor unit.

Specifically, the humidity intervals can be set separately at the rising curve or the decline curve, and the corresponding superheat degree parameters can be set for each humidity interval. For example, in the rising curve, the corresponding relationship between the humidity value and the superheat degree is: if the humidity value is more than 75%, the corresponding superheat degree is 9°C; if the humidity value ranges from 65% to 75%, the corresponding superheat degree is 7°C; if the humidity value ranges from 55% to 65%, the corresponding superheat degree is 5°C; if the humidity value is less than 55%, the corresponding superheat degree is 1°C. In the decline curve, the corresponding relationship between the humidity value and the superheat degree is: if the humidity value is more than 70%, the corresponding superheat degree is 9°C; if the humidity value ranges from 60% to 70%, the corresponding superheat degree is 7°C; if the humidity value ranges from 50% to 60%, the corresponding superheat degree is 5°C; if the humidity value is less than 50%, the corresponding superheat degree is 1°C. The humidity value interval and the corresponding superheat degree can also be set according to user requirements, which is not limited in this embodiment.

The corresponding relationship between the superheat degree and the opening degree of the electronic expansion valve can be determined according to the preset corresponding relationship. After the superheat degree is determined according to the above method, the opening degree of the electronic expansion valve is further determined based on the preset corresponding relationship between the superheat degree and the opening degree of the electronic expansion valve.

Operation S60, driving each indoor unit in the breezeless mode according to the second control parameter.

It can be understood that after the opening degree of the electronic expansion valve is determined, the opening degree of the electronic expansion valve corresponding to each indoor unit part is set to the corresponding opening value, thereby controlling each indoor unit in the breezeless mode.

In addition, in order to better determine the target operating mode, in this embodiment, two methods for determining the target operating mode are proposed. In the first method, the operating mode of the indoor unit corresponding to the maximum capacity in the capacity information is used as the target operating mode. For example, the ratio between the capacity A of the indoor unit in refrigerating mode and the capacity B of the indoor unit in the breezeless mode is calculated. If B/A ≥ 1 (which can also range from 0.8 to 1.5), it means that the indoor unit capacity A is larger. From the perspective of user experience, the requirement for the breezeless mode is larger, so the breezeless mode is determined to be the target operating mode. In addition, the threshold of the ratio can be adjusted according to requirements. For example, the ratio 1 can be adjusted to any number in the range of 0.8 to 1.5, which is mainly determined based on the user's preferred operating mode.

In the second method, the capacity information C of the outdoor unit of the VRF air conditioner is obtained, then the ratio between the capacity information corresponding to each operating mode and the outdoor unit capacity information is determined, and the target operating mode is determined based on the ratio. By calculating the values of B/C and A/C, the proportion of the capacity required in each operating mode to the total capacity is determined, and the target operating mode is determined based on the proportion. For example, considering that the requirement for breezeless refrigerating capacity is small, the operating frequency of the outdoor unit is required to be small. Only when the breezeless mode occupies the main requirement, the frequency of the outdoor unit needs to be strictly controlled. Therefore, if the ratio B/C between the capacity B of the indoor unit in the breezeless mode and the capacity information C of the outdoor unit is more than 50%, the breezeless mode is determined to be the target operating mode.

In the third embodiment, the control parameters of the indoor unit are adjusted according to the control parameters of the outdoor unit, so that the control parameters of the indoor unit can be more accurately determined to make the operating state of the indoor unit more reasonable and more in line with user requirements, thereby improving the user experience.

In addition, embodiments of the present application further propose a storage medium, and a program for controlling the VRF air conditioner is stored in the storage medium. When the program for controlling the VRF air conditioner is executed by a processor, the method for controlling the VRF air conditioner as mentioned above is implemented.

Since the storage medium adopts all the technical solutions of all the above embodiments, it has at least all the functions brought by the technical solutions of the above embodiments, which will not be repeated here.

In addition, as shown in FIG. 5, FIG. 5 is a structural block diagram of the device for controlling the VRF air conditioner according to a first embodiment of the present application. The embodiment of the present application further provides a device for controlling the VRF air conditioner.

In this embodiment, the device for controlling the VRF air conditioner includes an acquisition module 10, an analysis module 20, and a driving module 30.

The acquisition module 10 is configured to detect that indoor units of the VRF air conditioner are set to a plurality of operating modes and obtain capacity information of the indoor unit corresponding to each operating mode.

The VRF air conditioner includes an outdoor unit and a plurality of indoor units. After the confluence of the refrigerants in each indoor unit, the refrigerants will exchange heat in an outdoor unit. Each indoor unit can be controlled independently, which means that each indoor unit can be set to different operating modes. The operating modes mainly include a breezeless mode, a refrigerating mode or a heating mode. Setting the indoor unit of the VRF air conditioner to a plurality of operating modes means that at least two indoor units operate in different operating modes. For example, at least one indoor unit is set to the refrigerating mode and at least one indoor unit is set to the breezeless mode.

Different operating modes have different requirements for the evaporation temperature of the outdoor unit. For example, in the breezeless mode, the outdoor unit needs to provide a suitable temperature and comfortable wind feeling while avoiding the risk of condensation. Therefore, a higher evaporation temperature is required. In the refrigerating mode, if a suitable temperature and the faster refrigerating are required, the outdoor unit needs to be controlled to provide a lower evaporation temperature.

The capacity information can be the refrigerating capacity of the air conditioner, and each indoor unit can be classified according to the operating mode, and the sum of the refrigerating capacity of each indoor unit in each operating mode can be calculated. For example, if indoor units 1, 2, and 3 are set to the refrigerating mode, and indoor units 4 and 5 are set to the breezeless mode, then the obtained capacity information includes the sum A of the refrigerating capacity of indoor units 1, 2, and 3 in the refrigerating mode, and the sum B of the refrigerating capacity of indoor units 4 and 5 in the breezeless mode. When the VRF air conditioner operates, each indoor unit can detect its own operating parameter in real time or regularly, and then feed the parameter back to the outdoor unit. The outdoor unit determines the capacity information of each indoor unit according to the received parameters.

The analysis module 20 is configured to determine a target operating mode from the plurality of operating modes according to the capacity information.

Although the indoor units are set to a plurality of operating modes, the outdoor units can only be in one operating state. Therefore, in order to ensure the user experience, it is necessary to ensure that some indoor units can operate according to the original requirements. In addition, it is necessary to avoid serious fluctuations of other indoor units, which cannot deviate from the original requirements, and these indoor units correspond to the target operating mode with the highest priority.

In this embodiment, the priority of each operating mode is determined based on the capacity information. For example, the operating mode with the highest refrigerating capacity is used as the target operating mode. Or, considering the user's preference for different operating modes, the refrigerating capacity corresponding to each operating mode is corrected according to preset weight values, and then the operating mode with the highest refrigerating capacity is used as the target operating mode. Of course, the selection method for the target operating mode can be set according to user requirements, which is not limited in this embodiment.

Since user requirements may change at any time, the target operating mode may also change. For example, if the refrigerating capacities of the above-mentioned indoor units 1, 2, 3, 4, and 5 are same, when all indoor units are turned on, the target operating mode is the refrigerating mode. If the indoor units 1 and 2 are turned off, the target operating mode is the breezeless mode. The target operating mode can be determined at certain intervals, to respond to user operations timely.

The driving module 30 is configured to determine a first control parameter of an outdoor unit of the VRF air conditioner according to the target operating mode and drive the outdoor unit according to the first control parameter.

In the refrigerating mode, the outdoor unit needs to dissipate heat of the inputted high-temperature and high-pressure refrigerant, and output the low-temperature and low-pressure refrigerant to the indoor unit. Therefore, the first control parameter can be the evaporation temperature of the outdoor unit or the working frequency of the compressor.

The calculation methods for the first control parameters in different operating modes are preset in the driving module 30. After the target operating mode is determined, the first control parameter is determined based on the calculation method corresponding to the target operating mode. The calculation method for the first control parameter can be set according to user experience, which is not limited in this embodiment. If the indoor unit of the VRF air conditioner is only set to one operating mode, the driving module 30 can directly determine the corresponding control parameters based on the preset calculation method.

After the first control parameter is determined, if the first control parameter is the evaporation temperature, the outdoor unit is controlled, and the compressor power is controlled according to the evaporation temperature of the outdoor unit. Or, if the first control parameter is the compressor frequency, the compressor power is controlled to reach the frequency in the first control parameter.

In this embodiment, when the indoor unit of the VRF air conditioner operates in different operating modes, the operating mode with the highest priority is determined from each operating mode according to the capacity of the indoor unit, and the control parameter of the outdoor unit is calculated based on the determined operating mode with the highest priority, so that the outdoor unit can meet the requirements of the indoor unit operating in the operating mode with the highest priority. In this embodiment, the operating state of the VRF air conditioner is detected in real time, thereby adjusting the operating state of the outdoor unit in real time, to ensure that user requirements are met and improve user experience.

For other embodiments or specific implementations of the device for controlling the VRF air conditioner in this application may refer to the above method embodiments, which will not be repeated here.

It should be understood that, in the present application, the terms "including", "includes" or any other variants are used for covering non-exclusive contents, so that a series of processes, methods, items are all incorporated herein. Or the system not only includes those elements, but also includes other elements that are not clearly listed, or further includes the elements inherent in the process, the method, the item or the system. Without more restrictions, the elements limited by the description "include one..." are not intended to exclude additional same elements in the process, the method, the item, or the systems.

The serial numbers of the present application are only for description, and do not represent the advantages and disadvantages of the embodiments. In the claim including several devices, several of these devices may be embodied by the same hardware. The terms such as "first", "second", "third", and the like, do not indicate any order and may be interpreted as names.

Those skilled in the art can understand that all or part of the above embodiments can be implemented by instructing the software and the general hardware platform, and can also be implemented by the hardware. In many cases, the former is better for implementation. The essence or the part contributing to the related art of the technical solutions of the present application can be embodied in the form of a software product. The computer software product can be stored in the storage medium (such as a read-only memory or a random access memory, a disk, and an optical disk) as mentioned above, and may include several instructions to cause a device (which may be a mobile phone, a computer, a server, an air conditioner, or a network device, and the like) to execute all or part of the operations of the methods described in the various embodiments of the present application.

The above-mentioned embodiments are only some embodiments of the present application, and are not intended to limit the scope of the present application. Any equivalent structure conversion or equivalent process conversion made with reference to the description and the accompanying drawings of the present application, directly or indirectly applied in other related technical fields, should all fall in the scope of the present application.

**Claims**

1. A method for controlling a variable refrigerant flow (VRF) air conditioner, **characterized by** comprising:

   obtaining capacity information of the indoor unit corresponding to each operating mode in response to detecting that indoor units of the VRF air conditioner are set to a plurality of operating modes;
   determining a target operating mode from the plurality of operating modes according to the capacity information;

and
determining a first control parameter of an outdoor unit of the VRF air conditioner according to the target operating mode, and driving the outdoor unit according to the first control parameter.

2. The method for controlling the VRF air conditioner according to claim 1, wherein the determining the first control parameter of the outdoor unit of the VRF air conditioner according to the target operating mode, and driving the outdoor unit according to the first control parameter comprises:

determining that the target operating mode is a breezeless mode, and obtaining an environmental parameter of an environment where each indoor unit is located;
determining a lowest refrigeration temperature corresponding to the indoor unit of the VRF air conditioner in response to that the environmental parameter meets a refrigerating condition; and
determining the first control parameter of the outdoor unit according to the lowest refrigeration temperature, and driving the outdoor unit according to the first control parameter.

3. The method for controlling the VRF air conditioner according to claim 2, wherein after the obtaining the environmental parameter of the environment where each indoor unit is located, the method further comprises:

determining a humidity value of the environment where the indoor unit in the breezeless mode is located according to the environmental parameter in response to that the environmental parameter does not meet the refrigerating condition; and
determining the first control parameter of the outdoor unit according to the humidity value, and driving the outdoor unit according to the first control parameter.

4. The method for controlling the VRF air conditioner according to claim 1, wherein the determining the first control parameter of the outdoor unit of the VRF air conditioner according to the target operating mode, and driving the outdoor unit according to the first control parameter comprises:

determining that the target operating mode is a refrigerating mode, and determining a lowest refrigeration temperature corresponding to the indoor unit of the VRF air conditioner; and
determining the first control parameter of the outdoor unit according to the lowest refrigeration temperature, and driving the outdoor unit according to the first control parameter.

5. The method for controlling the VRF air conditioner according to any one of claims 1 to 4, wherein after the driving the outdoor unit according to the first control parameter, the method comprises:

obtaining a current control parameter of each indoor unit in the breezeless mode;
determining a second control parameter according to the first control parameter and the current control parameter; and
driving each indoor unit in the breezeless mode according to the second control parameter.

6. The method for controlling the VRF air conditioner according to any one of claims 1 to 4, wherein the determining the target operating mode from the plurality of operating modes according to the capacity information comprises:
setting the operating mode of the indoor unit corresponding to a maximum capacity in the capacity information as the target operating mode.

7. The method for controlling the VRF air conditioner according to any one of claims 1 to 4, wherein the determining the target operating mode from the plurality of operating modes according to the capacity information comprises:

obtaining the capacity information of the outdoor unit of the VRF air conditioner;
determining a ratio between capacity information corresponding to each operating mode and capacity information of the outdoor unit; and
determining the target operating mode according to the ratio.

8. A device for controlling a variable refrigerant flow (VRF) air conditioner, **characterized by** comprising:

an acquisition module, configured to detect that indoor units of the VRF air conditioner are set to a plurality of operating modes and obtain capacity information of the indoor unit corresponding to each operating mode;

an analysis module, configured to determine a target operating mode from the plurality of operating modes according to the capacity information; and

a driving module, configured to determine a first control parameter of an outdoor unit of the VRF air conditioner according to the target operating mode and drive the outdoor unit according to the first control parameter.

9. An equipment for controlling a variable refrigerant flow (VRF) air conditioner, **characterized by** comprising:

a memory;

a processor; and

a program for controlling the VRF air conditioner stored in the memory and executable on the processor, wherein when the program for controlling the VRF air conditioner is executed by the processor, the method for controlling the VRF air conditioner according to any one of claims 1 to 7 is implemented.

10. A storage medium, **characterized in that**, a program for controlling a variable refrigerant flow (VRF) air conditioner is stored in the storage medium, and when the program for controlling the VRF air conditioner is executed by a processor, the method for controlling the VRF air conditioner according to any one of claims 1 to 7 is implemented.

1001

1005

1002

| processor |
|---|

| operating system |
|---|
| network communication module |
| user interface module |
| program for controlling the VRF air conditioner |
| memory |

1003          1004

| user interface |
|---|

| network interface |
|---|

FIG. 1

| obtaining capacity information of the indoor unit corresponding to each operating mode in response to detecting that indoor units of the VRF air conditioner are set to a plurality of operating modes |
|---|

S10

| determining a target operating mode from the plurality of operating modes according to the capacity information |
|---|

S20

| determining a first control parameter of an outdoor unit of the VRF air conditioner according to the target operating mode, and driving the outdoor unit according to the first control parameter |
|---|

S30

FIG. 2

obtaining capacity information of the indoor unit corresponding to each operating mode in response to detecting that indoor units of the VRF air conditioner are set to a plurality of operating modes — S10

determining a target operating mode from the plurality of operating modes according to the capacity information — S20

determining that the target operating mode is a breezeless mode, and obtaining an environmental parameter of an environment where each indoor unit is located — S301

determining a lowest refrigeration temperature corresponding to the indoor unit of the VRF air conditioner in response to that the environmental parameter meets a refrigerating condition — S302

determining the first control parameter of the outdoor unit according to the lowest refrigeration temperature, and driving the outdoor unit according to the first control parameter — S303

FIG. 3

| | |
|---|---|
| obtaining capacity information of the indoor unit corresponding to each operating mode in response to detecting that indoor units of the VRF air conditioner are set to a plurality of operating modes | S10 |
| determining a target operating mode from the plurality of operating modes according to the capacity information | S20 |
| determining a first control parameter of an outdoor unit of the VRF air conditioner according to the target operating mode, and driving the outdoor unit according to the first control parameter | S30 |
| obtaining a current control parameter of each indoor unit in the breezeless mode | S40 |
| determining a second control parameter according to the first control parameter and the current control parameter | S50 |
| driving each indoor unit in the breezeless mode according to the second control parameter | S60 |

FIG. 4

device for controlling the VRF air conditioner

acquisition module — 10

analysis module — 20

driving module — 30

FIG. 5

| | INTERNATIONAL SEARCH REPORT | International application No.<br><br>**PCT/CN2022/088668** |
|---|---|---|

**A. CLASSIFICATION OF SUBJECT MATTER**

F24F 11/00(2018.01)i

According to International Patent Classification (IPC) or to both national classification and IPC

**B. FIELDS SEARCHED**

Minimum documentation searched (classification system followed by classification symbols)

F24F11/00; F25B49/02; F25B49/00

Documentation searched other than minimum documentation to the extent that such documents are included in the fields searched

Electronic data base consulted during the international search (name of data base and, where practicable, search terms used)

CNABS, CNTXT, CNKI, VEN: 多联机, 空调, 模式, 外机, 内机, 无风感, 控制, 目标模式; MULTI-SPLIT, AIR, CONDITIONING, MODE, WIND, SENSE, INDOOR, UNIT, OUTDOOR, CONTROL, AIM, TARGET

**C. DOCUMENTS CONSIDERED TO BE RELEVANT**

| Category* | Citation of document, with indication, where appropriate, of the relevant passages | Relevant to claim No. |
|---|---|---|
| A | CN 109631279 A (QINGDAO HAIER AIR-CONDITIONER ELECTRIC CO., LTD.) 16 April 2019 (2019-04-16)<br>description, pages 3-5, and figure 1 | 1-10 |
| A | CN 112413835 A (GUANGDONG MEDIA REFRIGERATION EQUIPMENT CO., LTD. et al.) 26 February 2021 (2021-02-26)<br>entire document | 1-10 |
| A | CN 104896621 A (GUANGDONG MIDEA HEATING & VENTILATION EQUIPMENT CO., LTD. et al.) 09 September 2015 (2015-09-09)<br>entire document | 1-10 |
| A | CN 110887189 A (NINGBO AUX ELECTRIC CO., LTD.) 17 March 2020 (2020-03-17)<br>entire document | 1-10 |
| A | CN 112303845 A (QINGDAO HAIER AIR CONDITIONER ELECTRIC CO., LTD. et al.) 02 February 2021 (2021-02-02)<br>entire document | 1-10 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 July 2022** | **25 July 2022** |

| Name and mailing address of the ISA/CN<br><br>**China National Intellectual Property Administration (ISA/CN)**<br>**No. 6, Xitucheng Road, Jimenqiao, Haidian District, Beijing 100088, China** | Authorized officer |
|---|---|
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/088668**

| Patent document cited in search report | | | Publication date (day/month/year) | Patent family member(s) | | | Publication date (day/month/year) |
|---|---|---|---|---|---|---|---|
| CN | 109631279 | A | 16 April 2019 | WO | 2020103407 | A1 | 28 May 2020 |
| CN | 112413835 | A | 26 February 2021 | None | | | |
| CN | 104896621 | A | 09 September 2015 | None | | | |
| CN | 110887189 | A | 17 March 2020 | None | | | |
| CN | 112303845 | A | 02 February 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110582292